(19) **Europäisches Patentamt**

**European Patent Office**

**Office européen des brevets**

(11) Veröffentlichungsnummer: **0 462 048 B1**

(12) **EUROPÄISCHE PATENTSCHRIFT**

(45) Veröffentlichungstag der Patentschrift: **22.02.95**

(51) Int. Cl.⁶: **B01D 3/00**, B01D 53/18, B01D 3/20

(21) Anmeldenummer: **91810351.6**

(22) Anmeldetag: **07.05.91**

(54) **Gas/Flüssigkeitsverteiler zwischen zwei Austauschabschnitten einer Gegenstromkolonne.**

(30) Priorität: **13.06.90 CH 1976/90**

(43) Veröffentlichungstag der Anmeldung:
**18.12.91 Patentblatt 91/51**

(45) Bekanntmachung des Hinweises auf die
Patenterteilung:
**22.02.95 Patentblatt 95/08**

(84) Benannte Vertragsstaaten:
**AT BE CH DE ES FR GB IT LI NL SE**

(56) Entgegenhaltungen:
**CH-A- 642 566**
**DE-A- 1 501 390**
**GB-A- 527 299**

(73) Patentinhaber: **Sulzer Chemtech AG**
**Hegifeldstrasse 10**
**CH-8404 Winterthur (CH)**

(72) Erfinder: **Ghelfi, Lorenzo**
**Lambergstrasse 5**
**CH-8610 Uster (CH)**
Erfinder: **Plüss, Raymond C.**
**Sigelwiesstrasse 27**
**CH-8451 Klein-Andelfingen (CH)**

(74) Vertreter: **Hammer, Bruno, Dr.**
**c/o Sulzer Management AG**
**KS/Patente/0007**
**CH-8401 Winterthur (CH)**

## Beschreibung

Die Erfindung betrifft einen Gas/Flüssigkeits-Verteiler zwischen zwei Austauschabschnitten einer Gegenstromkolonne gemäss Oberbegriff von Anspruch 1.

Verteilvorrichtungen der genannten Art sind beispielsweise aus der CH-A-642 566 bekannt.

Insbesondere bei ihrem Einsatz in Gegenstromkolonnen mit einem Strömungsparameter Phi grösser 0,1, - der definiert ist durch die Formel

$$Phi = L/G \text{ mal } (Rho_G/Rho_L)^{1/2},$$

wobei L bzw. G die Massenströme und $Rho_L$ bzw. $Rho_G$ die Dichten von Gas bzw. Flüssigkeit sind, - ist die Wirksamkeit dieser bekannten Verteilvorrichtungen für die Trennung des Gases von der im Gegenstrom dazu fliessenden Flüssigkeit relativ gering. Derart hohe Strömungsparameter, die das Verhältnis der kinetischen Energien von strömender Flüssigkeit und strömendem Gas widerspiegeln, sind beispielsweise gegeben bei Hochdruck-Destillationskolonnen mit Kolonnendrücken von mehr als 5 bar und bei Absorptionskolonnen mit sehr hohen Flüssigkeitsbelastungen.

Bei Hochdruck-Destillationskolonnen, bei denen der Kolonnendruck mehr als 5 bar beträgt, sind eine hohe Gasdichte - von beispielsweise 10 bis 70 kg/m$^3$ - und eine relativ geringe Flüssigkeitsdichte - von beispielsweise 300 bis 500 kg/m$^3$ - gegeben. Daraus ergibt sich ein relativ kleines Dichteverhältnis $Rho_{flüssig}$ zu $Rho_{gas}$ ($Rho_{fl}/Rho_g$), das z.B. kleiner als etwa 10 ist. Das relativ dichte Gas reisst daher leicht Flüssigkeit mit, insbesondere wenn die Flüssigkeit eine geringe Oberflächenspannung aufweist und dadurch viele kleine Tröpfchen entstehen. Die Trennung von Flüssigkeit und Gas ist daher in derartigen Kolonnen, die beispielsweise bei der Erdöldestillation oder bei der Trennung von leichten Kohlenwasserstoffen eingesetzt werden, erschwert.

Weiterhin ist auch das Geschwindigkeitsverhältnis von Gas und Flüssigkeit ($v_g/v_{fl}$) bei einer Hochdruck-Destillation relativ klein und beträgt z.B. ebenfalls etwa 10. Die Gasströmung wird dadurch instabil. Hochdruck-Destillationen mit Kolonnen, die in den Austauschabschnitten geordnete Packungen oder Füllkörperschüttungen enthalten, sind daher mit einem schlechten Trennungswirkungsgrad behaftet. Deshalb werden zur Hochdruck-Destillation bisher vorwiegend Bodenkolonnen eingesetzt. Diese Bodenkolonnen haben den Nachteil einer geringen aktiven Fläche für die Destillation von z.B. nur 15 % des Kolonnenquerschnitts. Der Rest wird von den Ablaufschächten in Anspruch genommen.

Aufgabe der Erfindung ist es, einen Gas/Flüssigkeits-Verteiler zu schaffen, welcher besonders bei den erwähnten Kolonnen mit grossen Strömungsparametern eine gleichmässige Beaufschlagung von Gas und Flüssigkeit auf dem anliegendem oberen bzw. unteren Packungsbett gewährleistet, und zusätzlich im Bereich zwischen den Packungsbetten stabile Strömungsbedingungen von Gas und Flüssigkeit aufrechterhält, um eine möglichst hohe Produktivität der Kolonne zu erreichen. Diese Aufgabe wird erfindungsgemäss durch die Merkmale von Anspruch 1 gelöst.

Während man bisher in der Regel den Strömungsquerschnitt für das Gas - mit etwa 30 bis 50 % des Gesamtquerschnitts - möglichst gross ausgelegt hat, um den Druckabfall in dem Verteiler niedrig zu halten, wird bei der Erfindung bewusst ein kleiner Querschnitt für die Gasströmung zur Verfügung gestellt und ein erhöhter Druckverlust angestrebt. Denn entgegen der bisherigen Ansicht hat man erkannt, dass dies, für eine Gleichverteilung des Gases gerade auch bei relativ geringen Strömungsgeschwindigkeiten erforderlich ist. Diese Gleichverteilung wird durch einen Staudruck erzwungen, der in jedem Verteiler durch die Reduzierung des Gesamtströmungsquerschnitts für das Gas erreicht wird. Dabei ist gleichzeitig die Gasgeschwindigkeit erhöht, wodurch die Gasströmung in grösserem Masse als bisher dem Einfluss der Flüssigkeit entzogen wird.

Mit dem neuen Verteiler wird weiterhin erreicht, dass Gas und Flüssigkeit zwischen zwei Austauschabschnitten der Kolonne in sehr hohem Masse getrennt voneinander auf separaten Strömungswegen geführt werden.

Als vorteilhaft hat es sich dabei erwiesen, wenn die Röhrchen für die Flüssigkeit mindestens bis auf 30 mm an den darunter liegenden Kolonnenabschnitt heranreichen und wenn pro m$^2$ des Bodens mindestens 150 Röhrchen für die Flüssigkeitsableitung vorhanden sind.

Um ein "Absaugen" der Flüssigkeit aus gefüllten Röhrchen durch eine Art Siphon-Wirkung zu verhindern - ein solches "Absaugen" führt zu unkontrollierbaren und ungleichmässigen Flüssigkeitsströmungen in den Röhrchen - ist es zweckmässig, die Röhrchen möglichst nahe unterhalb des Wannenbodens zu belüften, wofür mindestens eine Oeffnung in der Wand des Röhrchens möglichst unmittelbar unterhalb des Bodens vorgesehen sein kann.

Für die erwähnte weitgehende Trennung der Strömungswege hat es sich als nützlich erwiesen, wenn die Gasaustritte der Kamine möglichst nahe an einen darüberliegenden Abschnitt der Kolonne heranreichen, wobei ihr Abstand beispielsweise höchstens 50 mm beträgt; bei der Verengung der Strömungswege in den Kaminen haben sich Querschnittsreduktionen auf 1/2 bis 1/5 des Eintrittsquerschnitts bewährt; weiterhin sind die Verengungen mit Vorteil am Kaminaustritt angeordnet, um gegebenenfalls einen Abfluss von zu Flüssigkeit kondensiertem Gas aus dem Kamin zu ermöglichen. Die Gleichverteilung des Gases wird zusätzlich gefördert, wenn die Austrittsöffnung eines Kamins aus einer Anzahl kranzartig um den Kamin herum angeordneter, kleiner Austrittsröhrchen besteht. Schliesslich ist es aus Montagegründen, besonders bei nahe an einen Austauschabschnitt heranreichenden Kaminen, vorteilhaft, wenn die Kamine in ihrer Höhe aus einzelnen Bauteilen zusammengesetzt sind.

Die Vielzahl der Kamine machen eine einfache Montage wünschenswert; eine solche ist zu erreichen, wenn die in Durchgangsöffnungen des Bodens eingesetzten Kamine ringförmige Wülste aufweisen, die zwischen dem Boden und im Abstand vom Boden angeordneten Schienen verspannt sind; durch den Abstand der Schiene vom Boden wird gewährleistet, dass ein Abfliessen von Flüssigkeit durch unter den Schienen liegende Röhrchen hindurch nicht beeinträchtigt wird.

Für das Sammeln und Durchmischen der Flüssigkeit innerhalb des Verteilers können kanalartige Tröge vorgesehen sein, die in einem ersten Teilbereich geschlossen und in einem zweiten Teilbereich mit mindestens einem Auslass für die Flüssigkeit versehen sind, wobei der Auslass mit Vorteil am Ende des Troges angeordnet und/oder beispielsweise durch Weglassen einer Stirnwand des Troges realisiert sein kann.

Andererseits kann es unter Umständen vorteilhaft sein, wenn der Auslass aus einer Anzahl Öffnungen besteht, die auf höchstens der Hälfte, vorteilhaft einem Viertel, der Troglänge verteilt sind; die Oeffnungen können dabei sowohl am Ende als auch in der Mitte der Troglänge angeordnet sein.

Sammeln und Mischen der Flüssigkeit mit den genannten Trögen lassen sich besonders wirksam gestalten, wenn die Bodenauslässe von auf gleicher Niveauhöhe angeordneten Trögen jeweils an den diametral entgegengesetzten Enden vorgesehen sind. Eine andere wirkungsvolle Anordnung ist, wenn zwischen je zwei Trögen mit "Endauslässen" einer mit einem Auslass in der Mitte vorgesehen ist; weiterhin ist es zweckmässig, wenn zwei Lagen mit ihren Längsachsen senkrecht aufeinander stehender Tröge vorgesehen sind.

Wie bereits eingangs ausgeführt, ist das bevorzugte Anwendungsgebiet der Erfindung Gas/Flüssigkeitsverteiler ein Gegenstromkolonnen mit einem Strömungsparameter Phi grösser (>) 0,1.

Im folgenden wird die Erfindung anhand von Ausführungsbeispielen im Zusammenhang mit der Zeichnung näher erläutert.

Fig. 1 zeigt in schematischer Darstellung in einem Ausschnitt aus einer Kolonne eine Ausführungsform der Erfindung im Längsschnitt;

Fig. 2 gibt vergrössert den oberen und den unteren Bereich des Ausschnittes von Fig. 1 wieder;

Fig. 3 ist der Schnitt III-III von Fig. 2;

Fig. 4 zeigt eine Ausführungsform der kanalartigen Tröge;

Fig. 5 stellt in einem Schnitt senkrecht zur Kolonnenachse einen Ausschnitt aus einem Kolonnenquerschnitt dar und zeigt die Anordnung von Trögen in diesem Kolonnenquerschnitt, während

Fig. 6 schliesslich in gleicher Darstellung wie Fig. 5 der Schnitt von VI-VI von Fig. 1 ist, wobei nur einige der Tröge gezeigt sind.

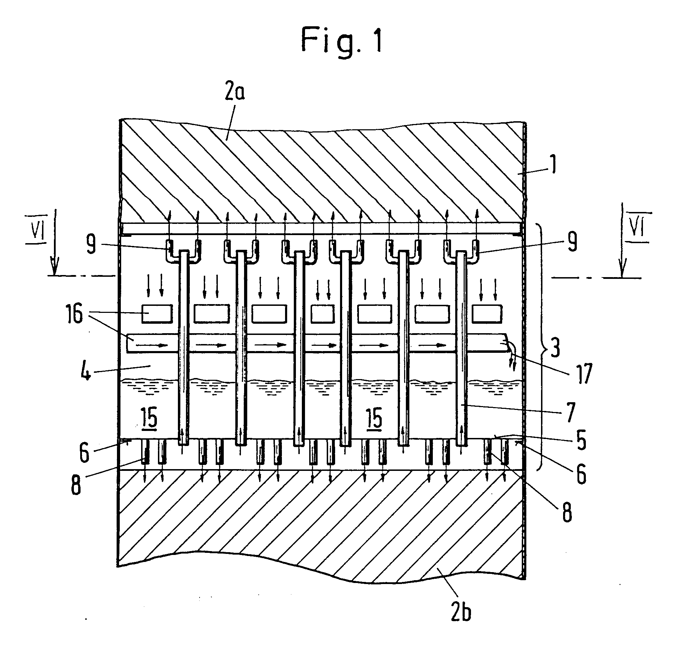

Fig. 1 zeigt einen Ausschnitt aus einer Hochdruck-Destillationskolonne 1, deren Abschnitte 2a, 2b beispielsweise Packungskörper enthalten, die z.B. aus geriffelten, lamellenartigen Elementen bestehen, wie sie in der CH-A-398 503 dargestellt sind.

Die Abschnitte 2a, 2b sind durch einen freien Zwischenraum 3 voneinander getrennt. In diesem ist ein Gas/Flüssigkeits-Verteiler 4 angeordnet, dessen Wannenboden 5 ebenso wie die Abschnitte 2a, 2b, auf an der Kolonnenwand angeordneten Trägern 6 abgestützt ist.

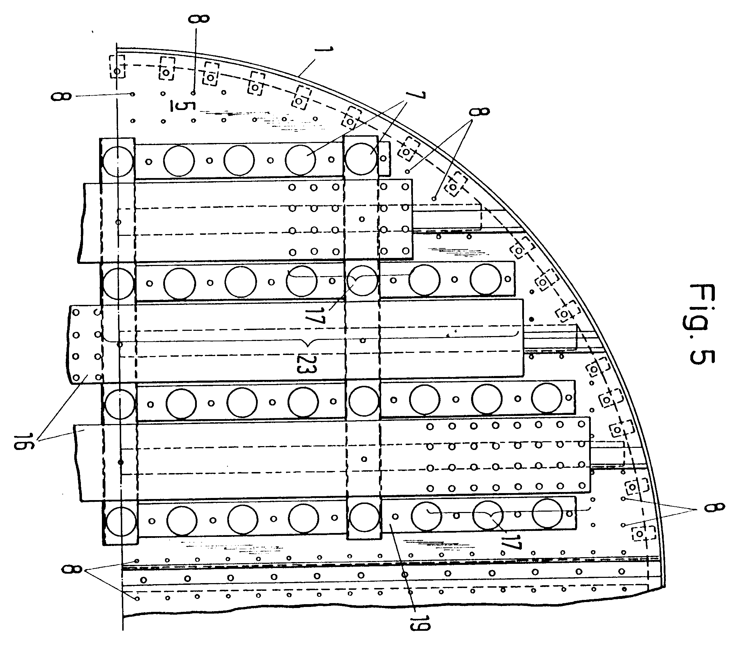

Im Wannenboden 5 sind einerseits eine Anzahl von Gaskaminen 7, die - wie Fig. 5 erkennen lässt - in Zeilen oder Reihen gleichmässig über den Querschnitt der Kolonne 1 verteilt sind, und andererseits zwischen den Zeilen oder Reihen der Kamine 7 eine Vielzahl von Röhrchen 8 montiert. Wie bereits erwähnt, sind mindestens zehn Kamine 7 und mindestens 150 Röhrchen 8 pro $m^2$ in der freien Kolonne vorgesehen. Im vorliegenden Beispiel sind 20 Kamine 7 und 180 Röhrchen 8 pro $m^2$ vorhanden.

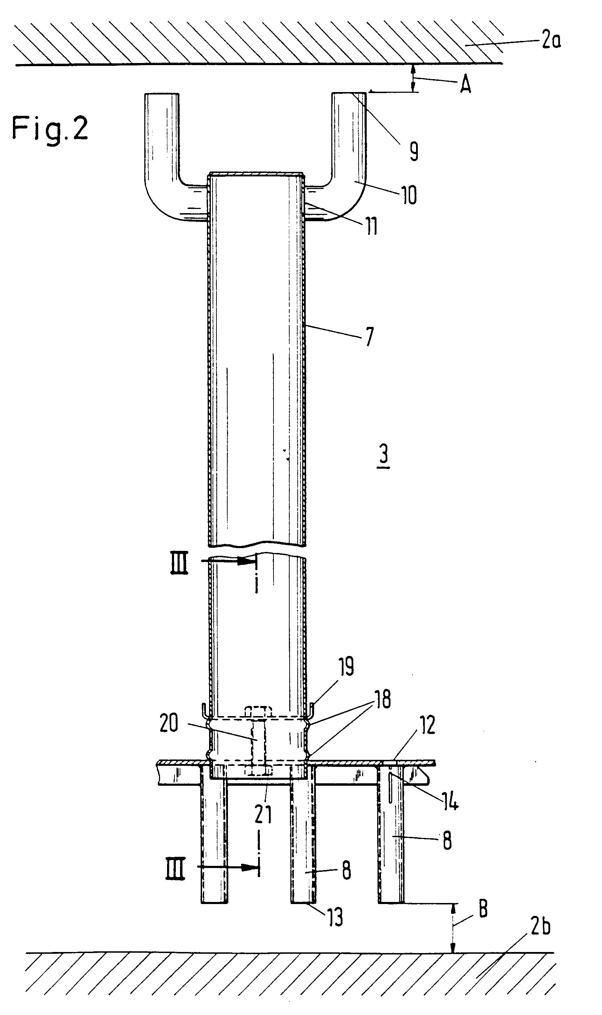

Die Gaskamine 7 erstrecken sich mit ihren Gasaustritten 9 bis nahe an den über den Zwischenraum 3 liegenden, in Strömungsrichtung des Gases nachfolgenden Kolonnenabschnitt 2a. Der Abstand A (Fig. 2) der Gasaustritte 9 vom Abschnitt 2a beträgt im vorliegenden Fall 30 mm. Die Gasaustritte 9 eines Kamins 7, deren Gesamtquerschnitt etwa ein Drittel des Eintrittsquerschnittes für die Gase in einen Kamin 7 beträgt, sind im vorliegenden Beispiel als seitlich an den Mantel des Kamins 7 angesetzte Winkelrohre 10 ausgebildet, die über verengte Querschnitte 11 mit dem Innenraum des Kamins 7 in Strömungsverbindung stehen. Selbstverständlich sind auch andere Ausführungsformen für die Gasaustritte 9, wie z.B. auf dem Umfang des Kaminmantels verteilte Löcher, ein mit einem Deckel versehener ringförmiger Schlitz oder ähnliches möglich. Die gezeigten Winkelrohre 10 haben jedoch - insbesondere wenn sie kranzartig um den Kamin 7 herum angeordnet sind - den Vorteil, das aus jedem Kamin 7 ausströmende Gas auf eine gegenüber dem Kaminquerschnitt vergrösserte Fläche zu verteilen. Infolge des kleinen Abstandes A haben die im Gegenstrom fliessenden Gas- und Flüssigkeitsphase kaum die Möglichkeit sich gegenseitig zu beeinflussen, wodurch die Trennung beider Phasen verbessert wird.

Die Röhrchen 8, die an den Boden 5 angeschweisst sind und durch Bohrungen 12, deren Querschnitt gegenüber dem Röhrchenquerschnitt verengt ist, mit der auf dem Boden 5 "gelagerten" Flüssigkeit 15 in Verbindung stehen, sind mit ihren Ausflussenden oder Austritten 13 bis nahe an den Kolonnenabschnitt 2b herangeführt. Ihr Abstand B davon beträgt im vorliegenden Fall 30 mm. Durch diese Massnahme gelangt die Flüssigkeit in den nachfolgenden Kolonnenabschnitt 2b, ohne dass sie den ihr entgegenströmenden Gasstrom in nennenswertem Masse ausgesetzt ist. Somit kann auch hier von dem Gasstrom nur wenig Flüssigkeit mitgerissen werden, wodurch die Trennung beider ebenfalls verbessert wird. Durch die Vielzahl der Röhrchen 8 ist eine gute Gleichverteilung der auf den Abschnitt 2b herabrieselnden Flüssigkeit gewährleistet.

Um ein "Absaugen" von Flüssigkeit aus mit Flüssigkeit gefüllten Röhrchen 8 zu verhindern, werden diese nahe der Bohrung 12 belüftet, wofür auf dem Umfang verteilte Schlitze 14 in den Röhrchen 8 vorgesehen sind.

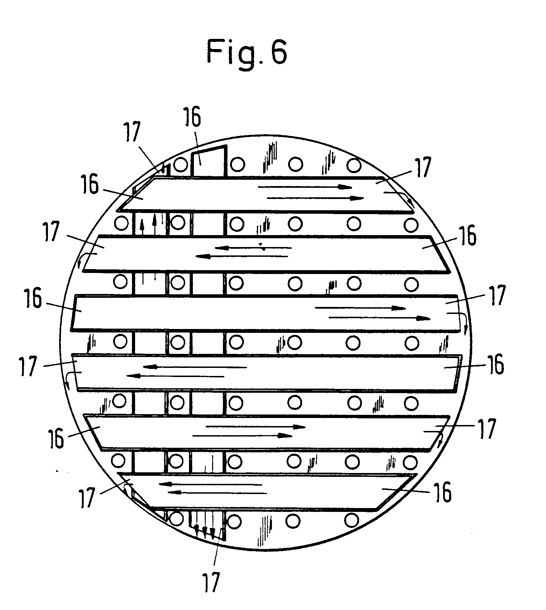

Im Zwischenraum 3 sind weiterhin oberhalb des Niveaus der Flüssigkeit 15 sich über den ganzen Kolonnenquerschnitt erstreckende Tröge 16 vorgesehen, die in zwei Lagen übereinander angeordnet sind, wobei die Längsachsen der Tröge 16 der einen Lage senkrecht auf denjenigen bei der zweiten Lage stehen. Weiterhin sind die Tröge 16, deren Aufbau noch beschrieben wird, so gestaltet, dass die Flüssigkeit nur aus einem Bodenauslass 17 nahe ihrem einen Ende ausfliessen kann Dadurch wird jeweils die über den ganzen Kolonnenquerschnitt längs einer Troglänge herabrieselnde Flüssigkeit gesammelt und durchmischt, ehe sie in den "See" 15 gelangt. Diese Durchmischung wird noch dadurch gefördert, dass die "Abflussenden" der Tröge 16 jeder Lage alternierend in einander diametral entgegengesetzte Richtungen weisen, wie dies in Fig. 5 und 6 gezeigt ist. Es ist jedoch auch möglich, bei einzelnen Trögen 16 eines Niveaus den Bodenauslass in der Mitte vorzusehen und diese Tröge 16 alternierend mit solchen mit Auslässen am Ende einzubauen.

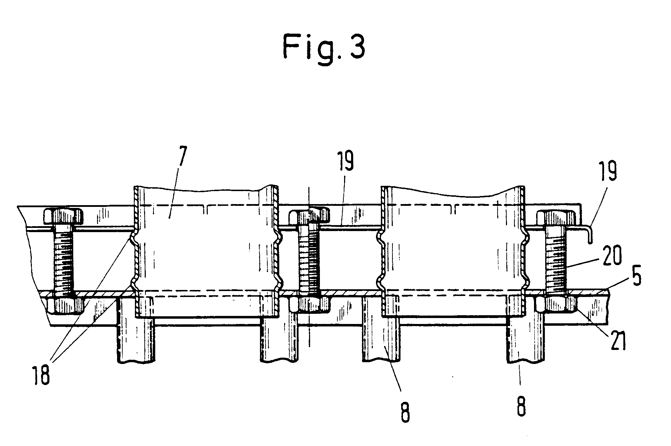

Für eine einfache Montage im Wannenboden 5 sind die Kamine 7 nahe ihres Fusses mit zwei Ringwülsten 18 versehen; mit Hilfe dieser Wülste 18 (Fig. 2 und 3) werden sie zwischen den Boden 5 und Schienen 19 eingeklemmt, wobei der Klemmeffekt durch zwischen den Kaminen 7 angeordnete Schraubenbolzen 20 erreicht wird, die in an die Unterseite der Böden 5 angeschweisste Muttern 21 eingeschraubt werden. Diese Art der Befestigung erlaubt - beispielsweise gegenüber einem Einschweissen der Kamine 7 in den Boden 5 - eine relativ einfache Montage, auch durch ein Mannloch, und ermöglicht darüberhinaus jederzeit die Auswechselung einzelner Kamine 7; der Abstand zwischen den Wülsten 18 gewährleistet ein unbehindertes Abfliessen der Flüssigkeit auch in den Bereichen unter den Schienen 19.

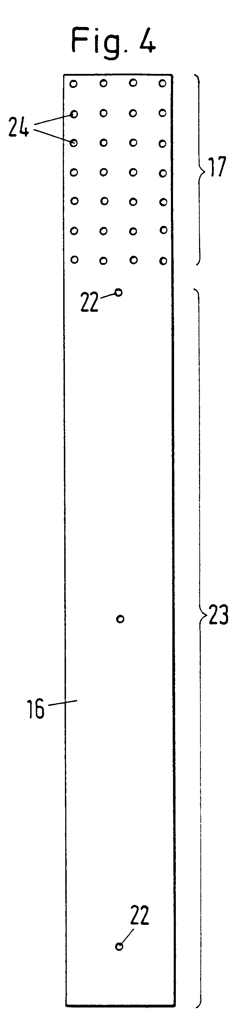

Die erwähnten kanalartigen Tröge 16, die beispielsweise in ihren Böden Bohrungen 22 für eine Verschraubung mit nicht gezeigten Tragrosten aufweisen, sind am Boden unterteilt in einen geschlossenen Teilbereich 23 und in den bereits erwähnten, als Austritt 17 dienenden Teilbereich; in Fig. 4 und 5 besteht der Bodenauslass 17 aus einer Anzahl Oeffnungen 24, die über eine Länge, die höchstens 1/2, vorteilhaft nur 1/4, der Troglänge beträgt, an einem Ende oder in der Mitte eines Troges 16 konzentriert sind. Der Bodenauslass 17 kann jedoch mit Vorteil auch ans Ende eines Troges 16 verlegt und durch das Fehlen einer Stirnwand des Troges realisiert sein, wie dies an den Trögen in den Fig. 1 und 6 gezeigt ist. Funktion und Anordnung der Tröge 16 im Zwischenraum 3 sind bereits im Vorstehenden beschrieben worden.

**Patentansprüche**

1. Gas/Flüssigkeits-Verteiler (4) zwischen zwei Austauschabschnitten (2a, 2b) einer Gegenstromkolonne, welcher einen sich über den ganzen Kolonnenquerschnitt erstrekenden Boden (5), eine Anzahl von darauf angeordneten Dampfkaminen (7) sowie zwischen den Kaminen (7) verteilt eine Vielzahl von Röhrchen (8) für die Flüssigkeitsableitung umfasst, wobei die Austritte (13) der Röhrchen nahe an den unteren Austauschabschnitt heranreichen und der Gesamtströmungsquerschnitt der Kamine höchstens 10 % des Kolonnenquerschnitts beträgt, dadurch gekennzeichnet, dass mindestens 10 Kamine pro $m^2$ des Bodens vorhanden sind und jeder Kamin relativ zu seinem Eintrittsquerschnitt eine Verengung (11) in seinem Strömungsquerschnitt aufweist.

2. Verteiler nach Anspruch 1, dadurch gekennzeichnet, dass die Röhrchen (8) mindestens bis auf 30 mm an den unteren Austauschabschnitt (2b) heranreichen.

3. Verteiler nach Anspruch 1 oder 2, dadurch gekennzeichnet, dass die Gasaustritte (9) der

Kamine (7) möglichst nahe an den oberen Austauschabschnitt (2a) heranreichen.

4. Verteiler nach Anspruch 3, dadurch gekennzeichnet, dass der Abstand der Gasaustritte (9) vom oberen Austauschabschnitt (2a) höchstens 50 mm beträgt.

5. Verteiler nach einem der Ansprüche 1 bis 4, dadurch gekennzeichnet, dass der Querschnitt des Kamins (7) auf 1/2 bis 1/5 seines Eintrittsquerschnitts verengt ist.

6. Verteiler nach einem der Ansprüche 1 bis 5, dadurch gekennzeichnet, dass die Kamine (7) jeweils in ihrer Höhe aus einzelnen Bauteilen zusammengesetzt sind.

7. Verteiler nach einem der Ansprüche 1 bis 6, dadurch gekennzeichnet, dass die Querschnittsverengung (11) des Kamins (7) an seinem Austritt vorgesehen ist.

8. Verteiler nach einem der Ansprüche 1 bis 7, dadurch gekennzeichnet, dass die Austrittsöffnung (9) eines Kamins (7) aus einer Anzahl kranzartig um den Kamin (7) herum angeordneter, kleiner Austrittsröhrchen (10) besteht.

9. Verteiler nach einem der Ansprüche 1 bis 8, dadurch gekennzeichnet, dass pro m² des Bodens (5) mindestens 150 Röhrchen (8) für die Flüssigkeitsableitung vorhanden sind.

10. Verteiler nach einem der Ansprüche 1 bis 9, dadurch gekennzeichnet, dass die Röhrchen (8) durch mindestens eine Öffnung (14) unterhalb des Bodens (5) belüftet sind.

11. Verteiler nach einem der Ansprüche 1 bis 10, dadurch gekennzeichnet, dass die in Durchgangsöffnungen des Bodens eingesetzten Kamine ringförmige Wülste aufweisen, die zwischen dem Boden und im Abstand vom Boden angeordneten Schienen verspannt sind.

12. Verteiler nach einem der Ansprüche 1 bis 11, dadurch gekennzeichnet, dass zwischen dem oberen Austauschabschnitt (2a) und dem Boden (5) kanalartige Tröge (16) vorgesehen sind, die in einem ersten Teilbereich geschlossen und in einem zweiten Teilbereich mit mindestens einem Auslass (17) für die Flüssigkeit versehen sind.

13. Verteiler nach Anspruch 12, dadurch gekennzeichnet, dass der Auslass (17) am Ende des Trogs (16) angeordnet ist.

14. Verteiler nach Anspruch 12, dadurch gekennzeichnet, dass der Auslass (17) aus einer Anzahl Öffnungen (24) besteht, die auf höchstens der Hälfte, bevorzugt einem Viertel der Troglänge verteilt sind.

15. Verteiler nach Anspruch 14, dadurch gekennzeichnet, dass die Öffnungen (24) einzelner Tröge (16) in der Mitte ihrer Längen konzentriert sind.

16. Verteiler nach Anspruch 13 oder 14, dadurch gekennzeichnet, dass die Auslässe (17) auf gleicher Niveauhöhe angeordneter, benachbarter Tröge (16) jeweils an den diametral entgegengesetzten Enden bzw. Hälften vorgesehen sind.

17. Verteiler nach einem der Ansprüche 12 bis 15, dadurch gekennzeichnet, dass auf einer Niveauhöhe alternierend Tröge (16) mit Auslässen (17) am Ende und in der Mitte angeordnet sind.

18. Verteiler nach einem der Ansprüche 12 bis 17, dadurch gekennzeichnet, dass zwei Lagen mit ihren Längsachsen senkrecht aufeinander stehender Tröge (16) vorgesehen sind.

19. Verwendung des Gas/Flüssigkeits-Verteilers nach einem der Ansprüche 1 bis 18 in einer Gegenstromkolonne, die mit einem Strömungsparameter Phi grösser als 0,1 betrieben wird, wobei Phi durch folgende Formel gegeben ist:

$$Phi = L/G \text{ mal } (Rho_G/Rho_L)^{1/2},$$

wobei L bzw. G die Massenströme und $Rho_L$ bzw. $Rho_G$ die Dichten von Gas bzw. Flüssigkeit sind.

**Claims**

1. A gas-liquid distributor (4) between two exchange portions (2a, 2b) of a counter-current column (1) having a a bottom (5) extending over the entire column cross-section, a number of vapour flues (7) disposed thereon and a number of tubes (8) for draining off liquid distributed between the flues (7), the outlets (13) of the tubes (6) extending to near the bottom exchange portion and the total flow cross-section of the flues being at most 10% of the column cross-section, characterised in that at least ten flues are provided per m² of the bottom and each flue has a constriction (11) in its flow cross-section, relatively to its inlet cross-section.

**2.** A distributor according to claim 1, characterised in that the tubes (8) extend at least to 3∅ mm from the bottom exchange portion (2b).

**3.** A distributor according to claim 1 or 2, characterised in that the gas outlets (9) of the flues (7) extend as near as possible to the upper exchange portion (2a).

**4.** A distributor according to claim 3, characterised in that the distance of the gas outlets (9) from the upper exchange portion (2a) is not more than 5∅ mm.

**5.** A distributor according to any of claims 1 to 4, characterised in that the cross-section of the flue (7) is constricted to 1/2 to 1/5 of its inlet cross-section.

**6.** A distributor according to any of claims 1 to 5, characterised in that the flues (7) are each assembled vertically from individual components.

**7.** A distributor according to any of claims 1 to 6, characterised in that the constriction (11) in the cross-section of the flue (7) is disposed at its outlet.

**8.** A distributor according to any of claims 1 to 7, characterised in that the outlet opening (9) of a flue (7) comprises a number of small outlet tubes (1∅) disposed in a ring around the flue (7).

**9.** A distributor according to any of claims 1 to 8, characterised in that at least 15∅ tubes (8) for draining off liquid are present per m² of the bottom (5).

**10.** A distributor according to any of claims 1 to 9, characterised in that the tubes (8) are ventilated by at least one opening (14) below the tank bottom (5).

**11.** A distributor according to any of claims 1 to 1∅, characterised in that the flues (7) inserted in openings through the bottom have annular beads clamped between the bottom and rails (19) disposed at a distance from the bottom.

**12.** A distributor according to any of claims 1 to 11, characterised in that duct-like troughs (16) are provided between the upper exchange portion (2a) and the bottom (5) and have a first closed part and a second part formed with at least one outlet (17) for the liquid.

**13.** A distributor according to claim 12, characterised in that the outlet (17) is disposed at the end of the trough (16).

**14.** A distributor according to claim 12, characterised in that the outlet (17) comprises a number of openings (24) distributed over not more than half, preferably a quarter, of the length of the trough.

**15.** A distributor according to claim 14, characterised in that the openings (24) of some troughs (16) are concentrated in the middle of their length.

**16.** A distributor according to claim 13 or 14, characterised in that the bottom outlets (17) of adjacent troughs (16) disposed at the same level are each provided at diametrically opposite ends or halves.

**17.** A distributor according to any of claims 12 to 15, characterised in that troughs (16) on a level are disposed alternately with outlets (17) at the end and in the middle.

**18.** A distributor according to any of claims 12 to 17, characterised in that two layers of troughs (16) are provided, with their longitudinal axes extending at right angles to one another.

**19.** Use of the gas/liquid distributor according to any of claims 1 - 18 in a counter-current column operated with a flow parameter Phi greater than ∅.1, Phi being given in accordance with the formula

$$\text{Phi} = \text{L/G times } (\text{Rho}_G/\text{Rho}_L)^{1/2},$$

where L and G are the mass flows and $\text{Rho}_L$ and $\text{Rho}_G$ are the densities of gas and liquid respectively.

**Revendications**

**1.** Distributeur gaz-liquide (4) entre deux parties d'échange (2a, 2b) d'une colonne à contre-courant qui comprend un fond (5) disposé sur la totalité de la section de la colonne, de multiples cheminées de vapeur (7) disposées sur ce dernier, ainsi que de multiples petits tubes (8) d'évacuation du liquide qui sont répartis entre les cheminées (7), les sorties (13) des petits tubes parvenant jusqu'à proximité de la partie inférieure d'échange et la section totale de circulation des cheminées correspondant au maximum à 10% de la section de la colonne, caractérisé en ce qu'il existe au moins 10 cheminées par m$^2$ du fond et chaque cheminée comporte un rétrécissement (11) de la section de circulation par rapport à sa section d'entrée.

2. Distributeur selon la revendication 1, caractérisé en ce que les petits tubes (8) parviennent à au moins 30 mm de la partie inférieure d'échange (2b).

3. Distributeur selon la revendication 1 ou 2, caractérisé en ce que la sortie de gaz (9) des cheminées (7) arrive le plus près possible de la partie supérieure d'échange (2a).

4. Distributeur selon la revendication 3, caractérisé en ce que la distance de la sortie (9) du gaz à la partie supérieure d'échange (2a) est au maximum de 50 mm.

5. Distributeur selon l'une des revendications 1 à 4, caractérisé en ce que la section de la cheminée (7) est rétrécie à 1/2 jusqu'à 1/5 de sa section d'entrée.

6. Distributeur selon l'une des revendications 1 à 5, caractérisé en ce que les cheminées (7) se composent d'un assemblage en hauteur de composants individuels.

7. Distributeur selon l'une des revendications 1 à 6, caractérisé en ce que le rétrécissement (11) de la section de la cheminée (7) est prévu à sa sortie.

8. Distributeur selon l'une des revendications 1 à 7, caractérisé en ce que l'orifice de sortie (9) d'une cheminée (7) se compose de multiples petits tubes de sortie (10) disposés en couronne autour de la cheminée (7).

9. Distributeur selon l'une des revendications 1 à 8, caractérisé en ce qu'au moins 150 petits tubes (8) d'évacuation du liquide sont présents par m$^2$ du fond (5).

10. Distributeur selon l'une des revendications 1 à 9, caractérisé en ce que les petits tubes (8) sont ventilés par au moins un trou (14) situé sous le fond (5).

11. Distributeur selon l'une des revendications 1 à 10, caractérisé en ce que les cheminées montées dans des trous de traversée du fond comportent des bourrelets annulaires qui sont fixés entre le fond et des barres disposées à distance du fond.

12. Distributeur selon l'une des revendications 1 à 11, caractérisé en ce que des auges (16) en forme de canaux prévues entre la partie supérieure d'échange (2a) et le fond (5) sont fermées dans une première partie et comportent dans une seconde partie au moins une sortie (17) du liquide.

13. Distributeur selon la revendication 12, caractérisé en ce que la sortie (17) est disposée à l'extrémité de l'auge (16).

14. Distributeur selon la revendication 12, caractérisé en ce que la sortie (17) consiste en de multiples trous (24) qui sont répartis sur au maximum la moitié, de préférence sur un quart de la longueur de l'auge.

15. Distributeur selon la revendication 14, caractérisé en ce que les trous (24) d'auges individuelles (16) sont concentrés au milieu de leur longueur.

16. Distributeur selon la revendication 13 ou 14, caractérisé en ce que les sorties (17) d'auges voisines (16) disposées au même niveau sont prévues aux extrémités ou dans les moitiés qui sont diamétralement opposées d'une auge à l'autre.

17. Distributeur selon l'une des revendications 12 à 15, caractérisé en ce que des auges (16) alternantes dans un niveau sont disposées de manière que leurs sorties (17) se trouvent d'une part à l'extrémité et d'autre part au milieu.

18. Distributeur selon l'une des revendications 12 à 17, caractérisé en ce que deux couches d'auges (16), dont les axes longitudinaux sont perpendiculaires, sont prévues.

19. Utilisation d'un distributeur gaz-liquide selon l'une des revendications 1 à 18 dans une colonne à contre-courant qui fonctionne avec un paramètre de circulation Phi supérieur à 0,1, Phi étant donné par la formule suivante :

Phi = L/G fois $(Rho_G/Rho_L)^{1/2}$

dans laquelle L ainsi que G sont les courants massiques et $Rho_L$ ainsi que $Rho_G$ sont les densités d'une part du gaz et d'autre part du liquide.

# Fig. 1

Fig.2

# Fig. 3

# Fig. 4

# Fig. 5

# Fig. 6